# DEMANDE DE BREVET EUROPEEN

(11) **EP 4 837 876 A1**
(43) Date de publication de la demande: **11.11.2026**
(21) Numéro de dépôt: 26175711.6
(22) Date de dépôt: 30.04.2026
(51) Int. Cl.: B66F 9/075

(54) **NACELLE ÉLÉVATRICE POUR L'ÉLÉVATION DE PERSONNES ET LE TRAVAIL EN HAUTEUR DESDITES PERSONNES MUNIE D'ESSIEUX EXTENSIBLES**

(30) Priorité: 06.05.2025 FR 2504826
(71) Demandeur: MANITOU BF, 44150 Ancenis (FR)
(72) Inventeur: MELLERIN, François, 44150 ANCENIS (FR); QUONIAM, François, 44150 ANCENIS (FR)
(74) Mandataire: Ipsilon

(57) **Abrégé**

L'invention propose une nacelle (1) comprenant un châssis (2) se développant suivant la direction avant/arrière, une plateforme (3) présentant une zone de réception d'un opérateur, le châssis (2) étant équipé de roues avant (6) et de roues arrières (7) respectivement reliées au châssis (2) par un essieu (8) de longueur ajustable, caractérisée en ce que la nacelle (1) comprend un mode de commande de réduction en longueur des essieux appelé mode rétractation et un sélecteur dudit mode et en ce que, à l'état sélectionné dudit mode, l'unité de pilotage (5) est configurée pour commander chaque mécanisme de réglage en longueur d'essieu (8) dans le sens d'une réduction de la longueur desdits essieux (8) en fonction d'au moins 5 conditions cumulatives.

## Description

La présente invention concerne une nacelle et son procédé de commande.

Elle concerne en particulier une nacelle comprenant un châssis d'axe longitudinal suivant la direction avant/arrière, une plateforme présentant une zone de réception d'un opérateur, un dispositif d'entrainement en déplacement de la plateforme par rapport au châssis, et une unité de pilotage, le châssis étant équipé de roues avant et de roues arrières respectivement reliées au châssis par un essieu de longueur ajustable, chaque essieu avant ou arrière étant associé à un mécanisme de réglage en longueur d'essieu, les roues avant et/ou arrière étant des roues directrices pouvant être braquées à droite ou à gauche, ledit châssis pouvant présenter un mode crabe, c'est à dire un mode dans lequel dans laquelle les roues avant et arrière sont parallèles entre elles et non parallèles à l'axe longitudinal, le châssis étant équipé d'un système moteur d'entrainement en rotation d'au moins une partie des roues dites motrices de la nacelle, le dispositif d'entrainement en déplacement de la plateforme comprenant un bras de levage porté par une tourelle pour un montage du bras en rotation autour d'un axe dit vertical à l'état positionné de la nacelle sur une surface plane horizontale, ce bras monté mobile entre une position basse et une position haute étant un bras télescopique de longueur ajustable entre une position sortie de grande longueur et une position rentrée et la nacelle comprenant un capteur de détermination de la position angulaire du bras entre ses positions haute et basse, un capteur de détermination de la position angulaire du bras autour de l'axe vertical, un capteur de détermination d'un paramètre représentatif de la longueur du bras, un capteur de détermination de l'angle de braquage des roues et un capteur de la vitesse de déplacement de la nacelle, caractérisée en ce que la nacelle comprend un mode de commande de réduction en longueur des essieux appelé mode rétractation et un sélecteur dudit mode de commande et en ce que, à l'état sélectionné dudit mode de commande et à l'état désactivé du mode crabe dans lequel les roues arrière et avant sont sensiblement parallèles à l'axe longitudinal du châssis, l'unité de pilotage est configurée pour commander chaque mécanisme de réglage en longueur d'essieu dans le sens d'une réduction de la longueur desdits essieux en fonction d'au moins 5 conditions cumulatives, la première condition étant liée à la vitesse de déplacement de la nacelle, la deuxième condition étant liée à l'angle de braquage des roues, la troisième condition étant liée à la position angulaire du bras entre ses positions haute et basse, la quatrième condition étant liée à la longueur du bras, la cinquième condition étant liée à la position angulaire du bras autour de son axe vertical.

Les nacelles de grande hauteur, par exemple dont la plateforme est apte à être écartée du sol d'une distance au moins égale à 30 m ont pour spécificité de présenter une voie importante afin d'en assurer la stabilité en mode travail, c'est-à-dire lorsque le bras de levage de la plateforme est élevé. De ce fait, lorsqu'une telle nacelle doit être placée sur un plateau de camion ou dans un conteneur, il est nécessaire de réduire la largeur de la voie, ce qui peut entrainer à nouveau des problèmes de stabilité.

On entend par « son axe vertical », l'axe vertical de tourelle autour duquel la tourelle est apte à être déplacée en rotation.

Un but de l'invention est de proposer une nacelle dont la conception permet de faire varier la dimension des voies en toute sécurité pour l'opérateur.

A cet effet, l'invention a pour objet une nacelle comprenant un châssis d'axe longitudinal suivant la direction avant/arrière, une plateforme présentant une zone de réception d'un opérateur, un dispositif d'entrainement en déplacement de la plateforme par rapport au châssis, et une unité de pilotage, le châssis étant équipé de roues avant et de roues arrières respectivement reliées au châssis par un essieu de longueur ajustable, chaque essieu avant ou arrière étant associé à un mécanisme de réglage en longueur d'essieu, les roues avant et/ou arrière étant des roues directrices pouvant être braquées à droite ou à gauche, le châssis étant équipé d'un système moteur d'entrainement en rotation d'au moins une partie des roues dites motrices de la nacelle, le dispositif d'entrainement en déplacement de la plateforme comprenant un bras de levage porté par une tourelle pour un montage du bras en rotation autour d'un axe dit vertical à l'état positionné de la nacelle sur une surface plane horizontale, ce bras monté mobile entre une position basse et une position haute étant un bras télescopique de longueur ajustable entre une position sortie de grande longueur et une position rentrée et la nacelle comprenant un capteur de détermination de la position angulaire du bras entre ses positions haute et basse, un capteur de détermination de la position angulaire du bras autour de l'axe vertical, un capteur de détermination d'un paramètre représentatif de la longueur du bras, un capteur de détermination de l'angle de braquage des roues et un capteur de la vitesse de déplacement de la nacelle, caractérisée en ce que la nacelle comprend un mode de commande de réduction en longueur des essieux appelé mode rétractation et un sélecteur dudit mode de commande et en ce que, à l'état sélectionné dudit mode, l'unité de pilotage est configurée pour commander chaque mécanisme de réglage en longueur d'essieu dans le sens d'une réduction de la longueur desdits essieux en fonction d'au moins 5 conditions cumulatives, la première condition étant liée à la vitesse de déplacement de la nacelle, la deuxième condition étant liée à l'angle de braquage des roues, la troisième condition étant liée à la position angulaire du bras entre ses positions haute et basse, la quatrième condition étant liée à la longueur du bras, la cinquième condition étant liée à la position angulaire du bras autour de son axe vertical.

La conception de la nacelle grâce à la présence de ces conditions cumulatives permet à l'opérateur de rester dans le panier lors de la commande de la réduction des voies et de l'étape de chargement de la nacelle sur un plateau de chargement ou dans un conteneur sans risque pour l'opérateur.

On entend par « sensiblement parallèles à l'axe longitudinal du châssis » que chacune des roues forme un angle par rapport à l'axe longitudinal du châssis égal ou inférieur à 5°.

On entend par « voie » la dimension maximale de la nacelle entre les roues d'un même essieu le long d'un axe perpendiculaire à l'axe longitudinal. La voie d'une nacelle correspond donc à la largeur maximale de cette nacelle.

Selon un mode de réalisation de l'invention, ledit châssis présente un mode crabe, c'est-à-dire un mode dans lequel les roues avant et arrière sont parallèles entre elles et non parallèles à l'axe longitudinal, l'unité de pilotage étant configurée pour commander chaque mécanisme de réglage en longueur d'essieu dans le sens d'une réduction de la longueur desdits essieux à l'état désactivé du mode crabe.

Selon un mode de réalisation de l'invention, à l'état sélectionné du mode rétractation et , le cas échéant, à l'état désactivé du mode crabe dans lequel les roues arrière et avant sont sensiblement parallèles à l'axe longitudinal du châssis, l'unité de pilotage est configurée pour commander le mécanisme de réglage en longueur d'essieu dans le sens d'une réduction de la longueur desdits essieux lorsque :
- la vitesse de la nacelle est à l'intérieur d'une plage de vitesses non nulle prédéterminée,
- l'angle de braquage des roues est compris à l'intérieur d'une plage prédéterminée,
- le bras est en position abaissée et rentrée et le bras forme en projection verticale avec la projection verticale de l'axe longitudinal du châssis un angle prédéterminé.

Ces conditions cumulatives permettent de garantir que la nacelle est dans une configuration sécuritaire pour l'utilisateur lors du mode de rétractation, notamment avec le bras en position abaissée et rentrée.

Lesdites au moins 5 conditions cumulatives peuvent être vérifiées dans tout ordre, notamment un ordre différent de celui décrit ci-avant.

L'angle de braquage correspond à l'angle formé par chaque roue avec un plan longitudinal du châssis passant par l'axe longitudinal du châssis.

Chaque roue peut être braquée indépendamment l'une par rapport aux autres.

Selon un mode de réalisation de l'invention, l'angle prédéterminé formé par le bras en position abaissée et rentrée est au plus égal à 15°.

Le conditionnement de l'activation du mode de rétraction à un angle prédéterminé formé par le bras en position abaissée et rentrée au plus égal à 15° bras permet de garantir que le risque de stabilité est limité.

Selon un mode de réalisation de l'invention, la nacelle comprend dans le mode rétractation au moins deux longueurs réduites des essieux sélectionnables et en ce que la plage prédéterminée d'angle de braquage des roues et correspondant à la deuxième condition est fonction de la longueur réduite des essieux sélectionnée.

Lesdites au moins deux longueurs réduites des essieux comprennent de préférence une première longueur réduite correspondant à une longueur de travail, correspondant par exemple à une voie de 2,5m. Lesdites au moins deux longueurs réduites des essieux comprennent de préférence une deuxième longueur réduite correspondant à une longueur de transport, correspondant par exemple à une voie de 2,3m

Une sélection d'au moins deux longueurs réduites des essieux permet à la nacelle d'être placée dans deux autres configurations de largeurs correspondant à des modes de fonctionnement spécifiques.

Dans la présente description, il est fait mention de « configuration de largeurs », de « mode de largeur » ou bien encore de « longueur d'essieu ». L'ensemble de ces formulations fait référence à une possibilité de variation de la largeur de la nacelle en modifiant la longueur des essieux de cette nacelle.

La nacelle comprend ainsi au moins trois modes de largeurs distinctes. Ces modes de largeurs distinctes comprennent de préférence un premier mode de largeur maximale, un deuxième mode de largeur intermédiaire et un troisième mode de largeur minimale.

Le premier mode de largeur maximale offre une stabilité de la nacelle maximale autorisant un déploiement maximal du bras en toute sécurité. La voie de la nacelle est par exemple de 3,80m dans ce premier mode de largeur maximale.

Le deuxième mode de largeur intermédiaire peut correspondre à un mode de travail de la nacelle permettant un encombrement réduit simplifiant la mobilité de la nacelle. La voie de la nacelle est par exemple de 2,50m dans ce deuxième mode de longueur intermédiaire. Ce deuxième mode de largeur correspond à la longueur de travail, ou première largeur réduite, citée ci-avant.

Le troisième mode de largeur minimale correspond par exemple à un encombrement réduit de la nacelle lui permettant d'être chargée à l'intérieur d'un conteneur ou sur une plateforme d'un camion. La voie de la nacelle est par exemple de 2,30m dans ce troisième mode de largeur minimale. Ce troisième mode de largeur correspond à la longueur de transport, ou deuxième longueur réduite, citée ci-avant.

Ainsi, la longueur des essieux de la nacelle peut être réduite depuis le premier mode de largeur maximale vers le deuxième mode de largeur intermédiaire ou bien vers le troisième mode de largeur minimale.

Selon un mode de réalisation de l'invention, la plage prédéterminée d'angle de braquage des roues est la plus réduite à l'état sélectionné de la longueur la plus réduite des essieux. Ainsi, le risque d'instabilité de la nacelle est réduit lorsque la nacelle est dans un mode de fonctionnement où la stabilité est réduite, par exemple dans le troisième mode de largeur correspondant à un mode de transport.

L'angle de braquage autorisé peut être fonction du mode de fonctionnement dans lequel la nacelle se trouve. L'angle de braquage autorisé des roues est par exemple égal ou inférieur à 15° lorsque la nacelle est dans le troisième mode de largeur, dit de transport, dans lequel la longueur des essieux est minimale. Cette valeur d'angle de braquage autorisée dans le troisième mode de largeur est un exemple non limitatif. Enfin, l'angle de braquage autorisé des roues n'est par exemple pas limité lorsque la nacelle est dans le premier mode de largeur dans lequel la longueur des essieux est maximale. Dans ce dernier cas, la nacelle peut présenter un angle de braquage allant jusqu'à une valeur maximale d'angle de braquage.

Selon un mode de réalisation de l'invention, chaque roue directrice qui est une roue orientable autour d'un axe dit vertical orthogonal à l'axe longitudinal du châssis, est une roue orientable de manière indépendante des autres roues.

Selon un mode de réalisation de l'invention, chaque essieu se présente sous forme d'un seul arbre de longueur ajustable ou de segments d'arbre parallèles, chaque segment d'arbre étant de longueur ajustable.

Selon un mode de réalisation de l'invention, l'essieu arrière est un essieu oscillant.

Selon un mode de réalisation de l'invention, la nacelle comprend au moins deux radars disposés l'un, à l'avant, l'autre, à l'arrière du châssis et en ce que, à l'état sélectionné dudit mode rétractation et , le cas échéant, à l'état désactivé du mode crabe dans lequel les roues arrière et avant sont sensiblement parallèles à l'axe longitudinal du châssis, l'unité de pilotage est configurée pour commander l'activation automatique des radars à l'état sélectionné du mode rétractation.

D'une manière générale, lesdits au moins deux radars peuvent être activés en fonction d'au moins une condition d'activation pouvant être choisie parmi : une activation du mode rétractation des essieux, une activation d'un mode d'extension des essieux, une activation d'une direction de déplacement prédéterminée et un déclenchement par l'utilisateur d'une commande d'activation des radars.

Selon un mode de réalisation de l'invention, la nacelle comprend au moins deux caméras disposées l'une, à l'avant, l'autre, à l'arrière du châssis, et en ce que à l'état sélectionné dudit mode rétractation et , le cas échéant, à l'état désactivé du mode crabe dans lequel les roues arrière et avant sont sensiblement parallèles à l'axe longitudinal du châssis, l'unité de pilotage est configurée pour commander l'activation automatique des caméras à l'état sélectionné du mode rétractation.

D'une manière générale, lesdits au moins deux caméras peuvent être activées en fonction d'au moins une condition d'activation pouvant être choisie parmi : une activation du mode rétractation des essieux, une activation d'un mode d'extension des essieux, une activation d'une direction de déplacement prédéterminée, un déclenchement par l'utilisateur d'une commande d'activation des caméras.

Selon un mode de réalisation de l'invention, la nacelle comprend au moins un capteur de luminosité et quatre éclairages disposés l'un à l'arrière du châssis, les autres sur la tourelle et en ce que à l'état sélectionné dudit mode rétractation et , le cas échéant, à l'état désactivé du mode crabe dans lequel les roues arrière et avant sont sensiblement parallèles à l'axe longitudinal du châssis, l'unité de pilotage est configurée pour commander l'activation automatique des éclairages en fonction du niveau de luminosité .

D'une manière générale, lesdits éclairages peuvent être activés en fonction d'au moins une condition d'activation pouvant être choisie parmi : une activation du mode rétractation des essieux, une activation d'un mode d'extension des essieux, une activation d'une direction de déplacement prédéterminée, un déclenchement par l'utilisateur d'une commande d'activation des éclairages.

L'invention a encore pour objet un procédé de commande d'une nacelle, caractérisé en ce que la nacelle étant conforme à la description ci-dessus, à l'état sélectionné du mode rétractation et , le cas échéant, à l'état désactivé du mode crabe dans lequel les roues arrière et avant sont sensiblement parallèles à l'axe longitudinal du châssis, le procédé comprend, pour commander le mécanisme de réglage en longueur des axes des essieux dans le sens d'une réduction de la longueur desdits essieux au moins une étape de détermination de la vitesse de déplacement au sol de la nacelle, une étape de détermination de l'angle de braquage des roues, une étape de détermination de la position du bras entre les positions haute et basse, une étape de détermination de l'état rentré ou sorti du bras et une étape de détermination de l'angle que le bras, qui est en position abaissée et rentrée, forme en projection verticale avec la projection verticale de l'axe longitudinal du châssis.

### Brève description des dessins

L'invention sera bien comprise à la lecture de la description suivante d'exemples de réalisation, en référence aux dessins annexés dans lesquels :
[Fig. 1] représente une vue en perspective d'une nacelle selon l'invention comprenant des essieux à longueur variable, la figure illustrant de haut en bas un premier, un deuxième et un troisième modes de largeur.
[Fig. 2] représente une vue en perspective de la nacelle de la figure 1 dans laquelle le bras de levage de la nacelle présente un angle de levage différent de celui de la figure 1.
[Fig. 3] représente une vue en coupe de la nacelle de la figure 2 dans un plan comprenant l'axe longitudinal de châssis et l'axe transversal de châssis, détaillant un exemple de mécanisme de réglage en longueur des essieux.

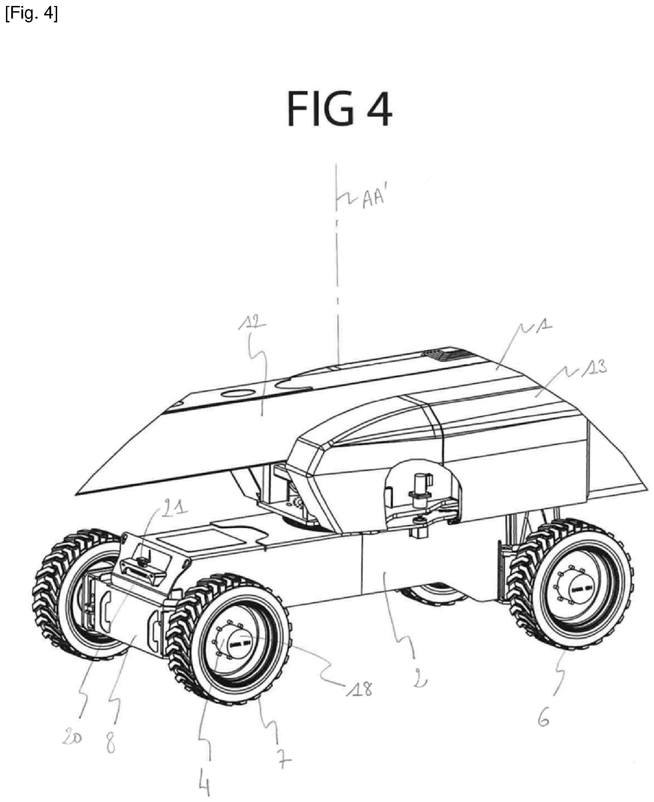

[Fig. 4] représente une vue en perspective partielle détaillée de la nacelle de la figure 2.

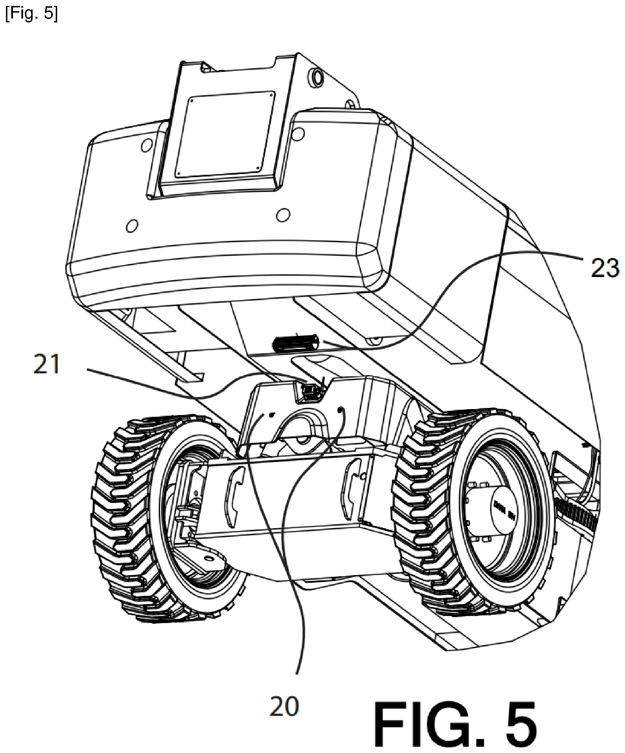

[Fig. 5] représente une vue de face partielle et en perspective de la nacelle de la figure 2.
[Fig. 6a] représente une première partie d'un logigramme illustrant une séquence de rétractation des essieux de la nacelle de la figure 2.
[Fig. 6b] représente une deuxième partie d'un logigramme illustrant une séquence de rétractation des essieux de la nacelle de la figure 2.
[Fig. 7a] représente une première partie d'un logigramme illustrant une séquence d'extension des essieux de la nacelle de la figure 2.
[Fig. 7b] représente une deuxième partie d'un logigramme illustrant une séquence d'extension des essieux de la nacelle de la figure 2.

### Description de mode(s) de réalisation

Par souci de clarté, les mêmes références désignant les mêmes éléments selon l'état de l'art et selon l'invention sont utilisées pour toutes les figures.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

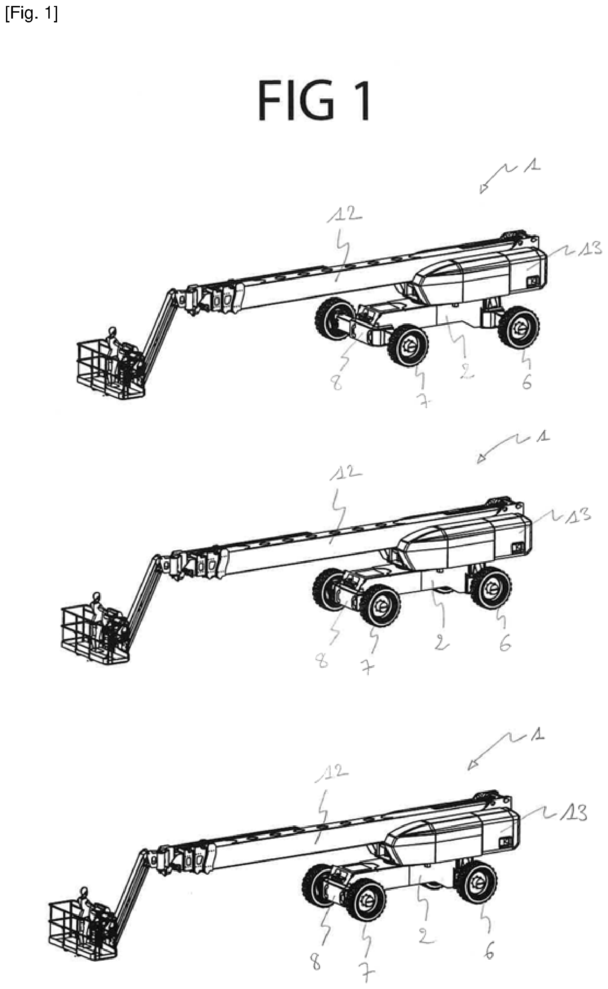

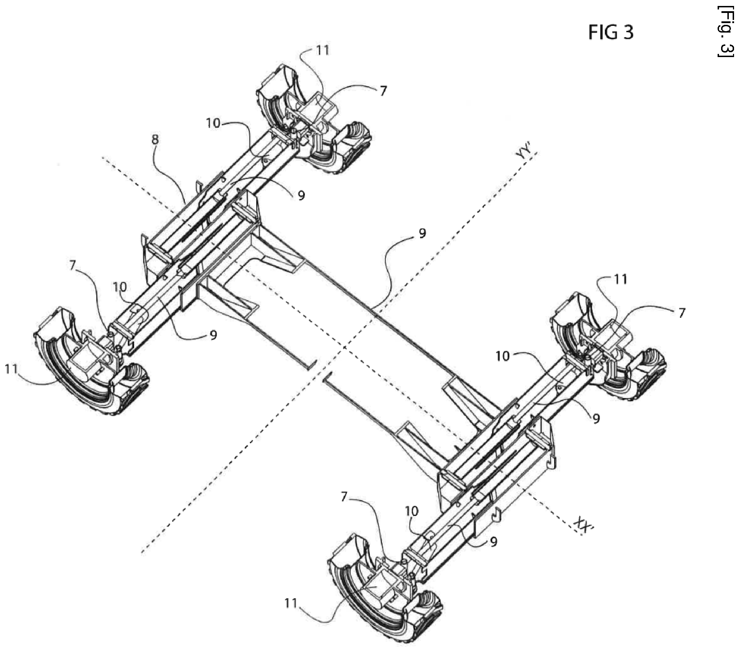

En référence aux figures 1 à 3, une nacelle 1 comprend un châssis 2 présentant un axe longitudinal de châssis XX' et un axe transversal de châssis YY' s'étendant perpendiculairement à l'axe longitudinal de châssis XX'. L'axe longitudinal de châssis XX' s'étend suivant une direction avant/arrière du châssis 2. L'axe transversal de châssis YY' s'étend suivant une direction latérale, ou gauche/droite, du châssis 2.

La nacelle 1 comprend une plateforme 3 présentant une zone de réception d'un opérateur. La nacelle 1 comprend également un dispositif d'entrainement en déplacement de la plateforme 4 par rapport au châssis 2.

Le dispositif d'entrainement en déplacement de la plateforme 4 comprend un bras de levage 12 porté par une tourelle 13 montée en rotation par rapport au châssis 2 autour d'un axe vertical de tourelle AA'. Ainsi, le déplacement en rotation de la plateforme 3 autour de l'axe de tourelle AA' par rapport au châssis 2 permet également un déplacement en rotation de la plateforme 3 par rapport au châssis 2 autour de cet axe de tourelle AA'.

Le bras de levage 12 est monté mobile entre une position basse et une position haute. Le bras de levage 12 est par exemple illustré sur la figure 1 dans sa position basse. Une rotation du bras de levage autour d'un axe d'orientation du bras BB' permet de déplacer le bras de levage 12 entre les positions basse et haute.

L'axe vertical de tourelle AA' est appelé « vertical » pour permettre une meilleure compréhension. L'axe vertical de tourelle AA' est orienté verticalement lorsque la nacelle 1 est positionnée sur une surface plane horizontale.

Le bras de levage 12 est un bras télescopique de longueur ajustable entre une position sortie de grande longueur et une position rentrée de longueur réduite. Le bras de levage 12 est par exemple illustré sur la figure 1 dans sa position rentrée de longueur réduite.

Le châssis 2 est équipé de roues avant 6 et de roues arrière 7 respectivement reliées au châssis 2 par un essieu 8. Les essieux 8 s'étend le long de l'axe transversal de châssis YY'. La nacelle 1 comprend en particulier deux roues avant 6 et deux arrière 7, soit quatre roues au total dans l'exemple de la figure 1.

Le châssis 2 est équipé d'un système moteur d'entrainement en rotation 11 d'au moins une partie des roues dites motrices de la nacelle 1. Le châssis 2 peut ainsi être déplacé par rapport au sol en entrainant en rotation une ou plusieurs parmi les roues avant 6 et arrière 7 pour faire rouler la nacelle 1 par rapport au sol. La nacelle 1 peut notamment être utilisée dans un premier mode de roulage à 2 roues motrices (roues avant 6 ou roues arrière 7) ou dans un deuxième mode de roulage à 4 roues motrices.

Les roues 6 avant et/ou arrière 7 sont des roues directrices pouvant être braquées à droite ou à gauche. En particulier, les roues 6 avant et/ou arrière 7 peuvent être braquées de manière indépendante de manière à autoriser des configurations spécifiques de braquage. Le châssis 2 est notamment configuré pour être placé dans un mode « crabe ». Dans ce mode crabe, les roues avant 6 et arrière sont parallèles entre elles, quelle que soit la direction d'avance du châssis 2. Les roues avant 6 et arrière 7 sont donc parallèles entre elles, avec un angle de braquage non nul par rapport à l'axe longitudinal de châssis XX'. Ainsi, le châssis 2 se déplace en translation rectiligne le long d'une direction parallèle à la direction d'orientation des roues avant 6 et arrière 7. Ce mode crabe permet de faciliter la mobilité du châssis 2 dans des situations spécifiques, par exemple lors de manœuvres sur un terrain plus restreint, notamment pour le déplacement d'outils spéciaux.

Les essieux 8 sont de longueur ajustable de sorte que la dimension de l'essieu le long de l'axe transversal de châssis YY' est ajustable. Chaque essieu 8 présente donc une pluralité de longueurs le long de l'axe transversal de châssis YY'. En particulier, chaque essieu 8 comprend au moins trois longueurs de fonctionnement. Ces longueurs de fonctionnement permettent à la nacelle d'être placée dans des modes de fonctionnement différentes qui seront définies ci-après.

Chaque essieu 8 avant ou arrière est associé à un mécanisme de réglage en longueur d'essieu 9. Ce mécanisme de réglage en longueur d'essieu 9 est par exemple un vérin, notamment hydraulique, comprenant une tige à l'extrémité de laquelle une des roues avant 6 ou arrière 7 est montée. La rétraction ou l'extension d'un essieu 8 via le mécanisme de réglage en longueur d'essieu 9 permet d'ajuster la longueur de l'essieu 8, et donc la largeur ou la voie de la nacelle 1 le long de l'axe transversal YY'.

La réduction de la voie de la nacelle 1 a pour objectif de réduire l'encombrement de la nacelle, par exemple en vue du transport de celle-ci dans un conteneur ou sur une plateforme d'un camion.

L'extension de la voie de la nacelle 1 a pour objectif d'améliorer la stabilité de la nacelle 1 de manière à permettre au bras de levage 12 d'être déplacé à une hauteur plus élevée, à une position plus éloignée du châssis et/ou avec une charge plus importante.

La nacelle 1 comprend au moins trois modes de largeurs distinctes d'essieux 8. Ces modes de largeurs distinctes d'essieux 8 comprennent de préférence un premier mode de largeur maximale illustré sur la partie supérieure de la figure 1, un deuxième mode de largeur intermédiaire visible illustrée sur la partie centrale de la figure 1 et un troisième mode de largeur minimale sur la partie inférieure de la figure 1.

Le premier mode de largeur maximale offre une stabilité de la nacelle 1 maximale autorisant un déploiement maximal du bras en toute sécurité. La voie de la nacelle est de 3,80m dans ce premier mode de largeur maximale.

Le deuxième mode de largeur intermédiaire correspond à une configuration de travail de la nacelle 1 permettant un encombrement réduit simplifiant la mobilité de la nacelle 1. La voie de la nacelle est de 2,50m dans ce deuxième mode de largeur intermédiaire.

Le troisième mode de largeur minimale correspond par exemple à un encombrement réduit de la nacelle 1 lui permettant d'être chargée à l'intérieur d'un conteneur ou sur une plateforme d'un camion. La voie de la nacelle 1 est de 2,30m dans ce troisième mode de largeur minimale.

La nacelle 1 comprend en outre une unité de pilotage 5 permettant de piloter, entre autres, le dispositif d'entrainement de la plateforme 4, chaque mécanisme de réglage en longueur d'essieu 9, chaque système d'orientation de roue 10 et le système moteur d'entrainement en rotation 11 de roue.

L'unité de pilotage 5 est configurée pour modifier la longueur des essieux 8 en pilotant les mécanismes de réglage en longueur d'essieu 9. Ainsi, l'unité de pilotage 5 peut activer un mode rétraction permettant de réduire la longueur des essieux 8 et un mode extension permettant d'augmenter la longueur des essieux 8. L'unité de pilotage 5 permet ainsi de changer le mode de largeur du châssis 2.

A titre d'exemple, si le châssis 2 est dans le premier mode de largeur, l'unité de pilotage permet de placer le châssis 2 dans le deuxième ou le troisième modes de largeur sous la forme d'une réduction de la longueur des essieux 8.

Inversement, si le châssis 2 est dans le troisième mode de largeur, dit de transport, l'unité de pilotage 5 permet de placer le châssis 2 dans le premier ou le deuxième mode de largeur sous la forme d'une extension de la longueur des essieux 8.

L'unité de pilotage 5 est configurée pour désactiver le mode crabe lors du passage du châssis 2 depuis un mode de fonctionnement vers un autre mode de fonctionnement. Ainsi, le mode crabe peut être actif quel que soit le mode de largeur du châssis, notamment les premier, deuxième ou troisième modes de largeur, mais ce mode crabe est désactivé lorsque l'unité de pilotage 5 opère un changement de mode fonctionnement. Ainsi, l'unité de pilotage 5 est configurée pour mettre le mode crabe à l'état désactivé lors d'une phase de rétractation et/ou d'extension du châssis. On entend par « état désactivé du mode crabe » le fait que les roues avant 6 et arrière 7 ne peuvent pas être placées parallèles entre elles, à l'exception d'une position dans laquelle les roues avant 6 et arrière 7 sont alignées avec l'axe longitudinal de châssis XX'.

La nacelle 1 comprend en outre un sélecteur de mode 19 permettant de sélectionner le mode rétractation ou le mode d'extension de la nacelle 1.

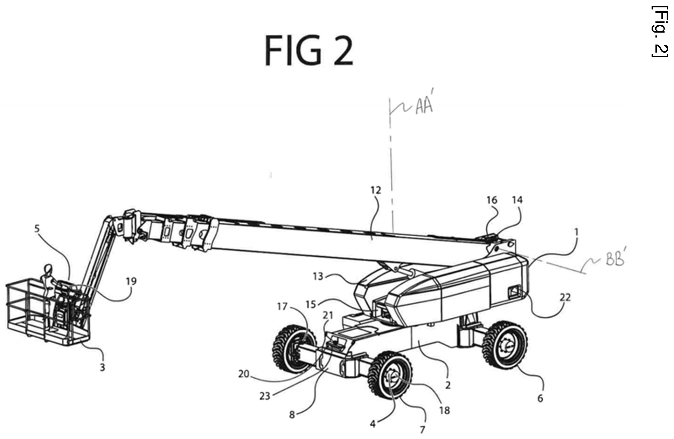

En référence à la figure 2, la nacelle 1 comprend en outre une pluralité de capteurs connectés à l'unité de pilotage 5 de manière à transmettre une information à l'unité de pilotage.

La nacelle 1 comprend au moins un capteur de position du bras 14 permettant de déterminer la position basse et/ou haute du bras de levage 12, au moins un capteur de longueur du bras 16 permettant de déterminer la longueur d'extension du bras de levage 12 et au moins un capteur de tourelle 15 permettant de déterminer la position angulaire de la tourelle 13.

La nacelle 1 comprend également au moins un capteur d'angle de braquage de roue 17 permettant de déterminer l'angle de braquage d'une roue et un capteur de vitesse 18 permettant de déterminer la vitesse de déplacement du châssis par rapport au sol.

L'unité de pilotage 5 est configurée pour commander le mécanisme de réglage en longueur d'essieu dans le sens d'une réduction de la longueur desdits essieux en fonction d'au moins cinq conditions cumulatives lorsque le mode crabe est désactivé. Autrement dit, lorsque le sélecteur de mode 19 est positionné sur une sélection du mode rétractation, l'unité de pilotage autorise une rétractation des essieux 8 par le mécanisme de réglage en longueur d'essieu 9 si les cinq conditions sont remplies et que le mode crabe est désactivé.

La rétractation des essieux 8 correspond au passage du premier mode de largeur vers le deuxième ou le troisième modes de largeur ou bien encore depuis le deuxième mode de largeur vers le troisième mode de largeur. De manière similaire, l'extension des essieux 8 correspond au passage du troisième mode de largeur vers le deuxième ou le premier modes de largeur ou bien encore depuis le deuxième mode de largeur vers le premier mode de largeur.

La première condition est liée à la vitesse de déplacement de la nacelle. Cette condition consiste à déterminer si la vitesse de déplacement de la nacelle 1 est à l'intérieur d'une plage de vitesse non nulle prédéterminée.

La deuxième condition est liée à l'angle de braquage des roues. L'angle de braquage des roues est compris à l'intérieur d'une plage prédéterminée. La plage prédéterminée d'angle de braquage des roues et correspondant à la deuxième condition est fonction de la longueur réduite des essieux sélectionnée. Les longueurs réduites sont par exemple les longueurs intermédiaire et minimale correspondant aux deuxième et troisième modes de largeur, dits mode de travail et mode de transport.

La troisième condition est liée à la position angulaire du bras de levage 12 entre ses positions haute et basse. Le bras de levage 12 est en position abaissée, illustrée en figure 1.

La quatrième condition est liée à la longueur du bras de levage 12. Le bras de levage 12 est dans la position rentrée, illustrée en figure 1.

La cinquième condition est liée à la position angulaire du bras autour de l'axe vertical de tourelle AA'. L'angle prédéterminé formé par le bras de levage 12 est au plus égal à 15° par rapport à l'axe longitudinal de châssis XX', dans un plan perpendiculaire à l'axe vertical de tourelle AA'.

La nacelle 1 comprend en outre une pluralité de radars 20 notamment disposés à l'avant et à l'arrière du châssis 2. Les radars 20 permettent de détecter la présence d'un obstacle afin de prévenir l'utilisateur lors d'une manœuvre. A l'état sélectionné du mode rétractation et à l'état désactivé du mode crabe dans lequel les roues arrière 7 et avant 6 sont sensiblement parallèles à l'axe longitudinal du châssis XX', l'unité de pilotage 5 est configurée pour commander l'activation automatique des radars 20.

La nacelle 1 comprend une pluralité de caméras 21, par exemple deux, disposées à l'avant et l'arrière du châssis 2. Les caméras 21 permettent de transmettre un signal vidéo à une interface utilisateur, notamment via l'unité de pilotage 5, pour permettre à l'utilisateur de visualiser l'environnement autour du châssis 2. A l'état sélectionné du mode rétractation et à l'état désactivé du mode crabe dans lequel les roues arrière 7 et avant 6 sont sensiblement parallèles à l'axe longitudinal du châssis XX', l'unité de pilotage 5 est configurée pour commander l'activation automatique des caméras 21.

La nacelle 1 comprend en outre un capteur de luminosité 22 et une pluralité d'éclairages 23 disposés à l'arrière du châssis 2 et sur la tourelle 13. A l'état sélectionné du mode rétractation et à l'état désactivé du mode crabe dans lequel les roues arrière 7 et avant 6 sont sensiblement parallèles à l'axe longitudinal du châssis XX', l'unité de pilotage 5 est configurée pour commander l'activation automatique des éclairages 23 en fonction du niveau de luminosité détecté par le capteur de luminosité 22.

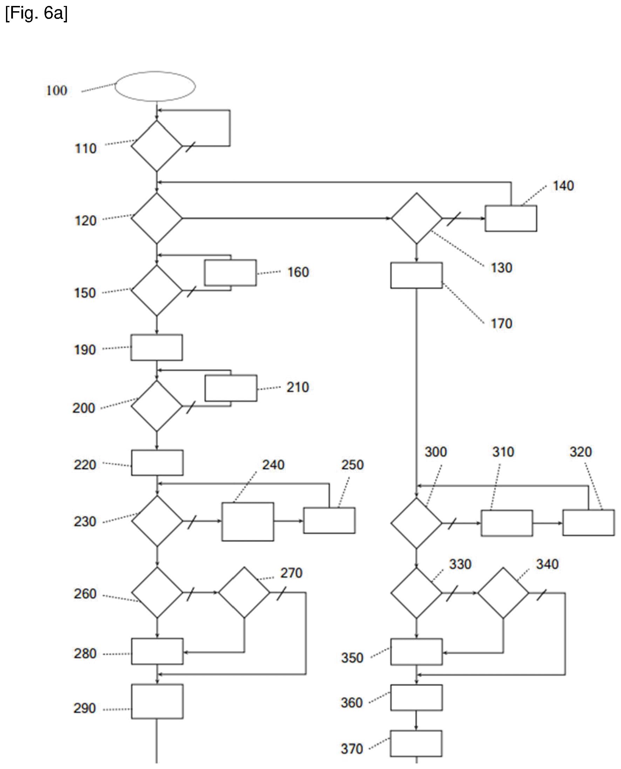

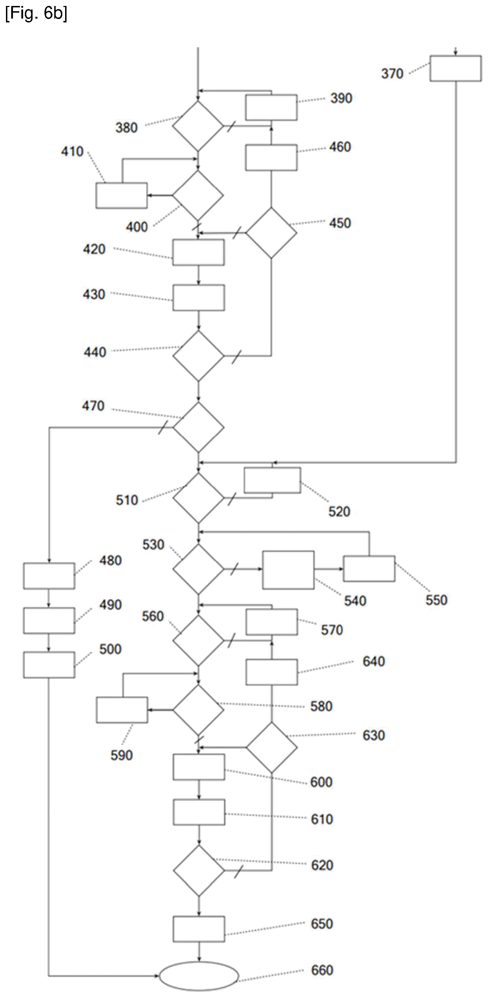

Un logigramme représente sur les figures 6a et 6b, un exemple d'une séquence d'activation du mode rétractation selon le mode de largeur des essieux 8 dans lequel se trouve le châssis 2. Une première partie du logigramme est représentée en figure 6a et la deuxième partie de ce logigramme, i.e. la suite de celui-ci, est représentée sur la figure 6b.

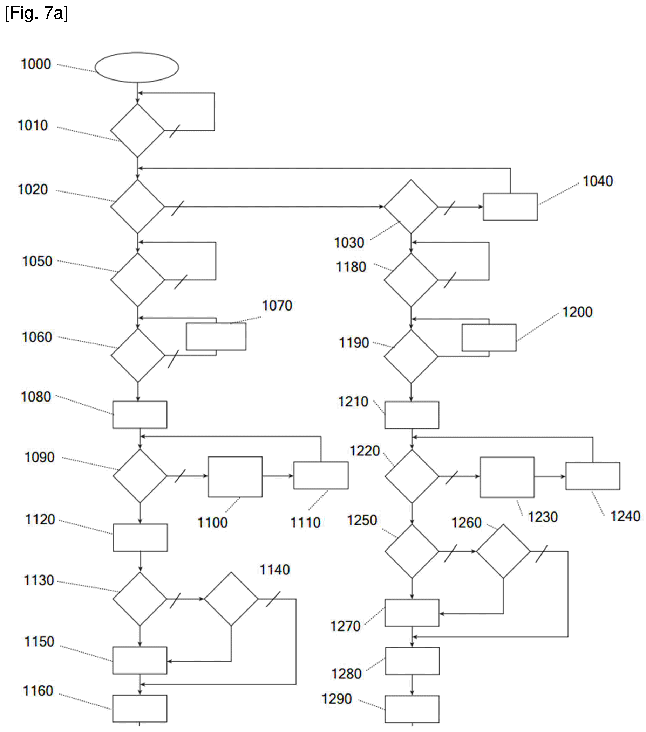

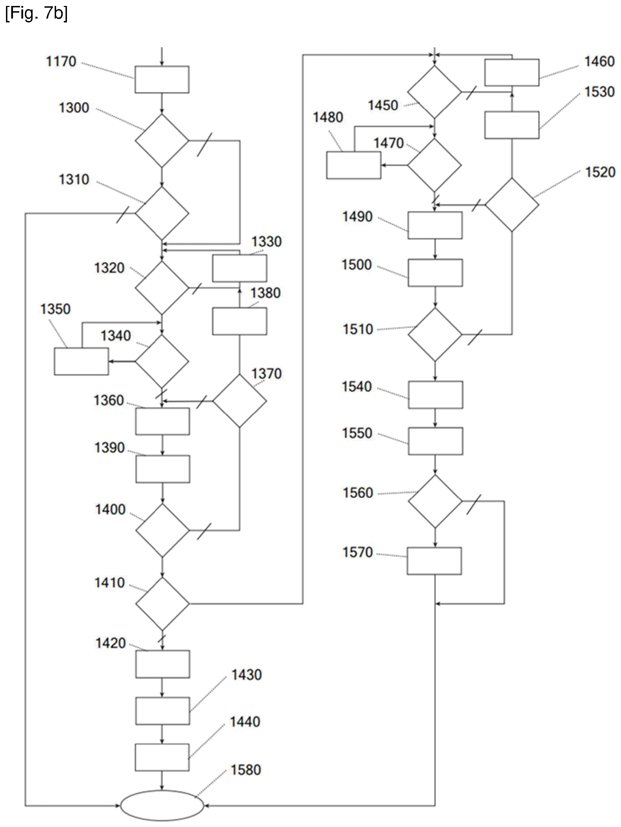

Une action est représentée par un carré ou un rectangle dans les logigrammes des figures 6a, 6b, 7a et 7b. Une condition est représentée par un losange avec deux chemins possibles pour la suite de la séquence dans ces logigrammes. Un premier chemin suivant la condition est barré, l'autre est dépourvue de barre. Lorsqu'une condition n'est pas respectée ou remplie, la séquence se poursuit avec le chemin barré. A contrario, lorsque la condition est respectée ou remplie, la séquence se poursuit avec le chemin dépourvu de barre. A titre d'exemple, une condition interrogeant si le châssis 2 est dans le premier mode de largeur des essieux 8 est respectée/remplie si le châssis 2 est effectivement dans le premier mode de largeur. Si le châssis 2 est dans un autre mode de largeur des essieux 8 ou en transition vers l'un des modes de largeur, la condition n'est ici pas respectée/remplie.

Ces logigrammes sont mis en œuvre par l'unité de pilotage 5.

Ces logigrammes comprennent chacun la vérification de conditions cumulatives pour activer le mode rétractation et/ou extension permettant de modifier la longueur des essieux. Ces conditions peuvent être vérifiées dans tout ordre permettant de vérifier que l'ensemble des conditions sont remplies. Ainsi, l'unité de pilotage 5 peut mettre en œuvre les étapes de vérification des conditions dans tout ordre permettant de vérifier ces conditions.

Les conditions sont au nombre de 5 et sont les suivantes : la première condition est liée à la vitesse de déplacement de la nacelle, la deuxième condition est liée à l'angle de braquage des roues, la troisième condition est liée à la position angulaire du bras entre ses positions haute et basse, la quatrième condition est liée à la longueur du bras et la cinquième condition est liée à la position angulaire du bras autour de son axe vertical.

### Exemple séquence mode rétractation

En référence aux figures 6a et 6b, l'unité de pilotage démarre 100 la séquence de rétractation du châssis 2 et détermine 110 si le mode rétractation est activé.

Si le mode rétractation est activé, l'unité de pilotage 5 détermine 120 si le châssis est dans le premier mode de largeur (longueur d'essieu de 3,80m). Si le châssis 2 n'est pas dans le premier mode de largeur, l'unité de pilotage 5 détermine 130 si le châssis 2 est dans le deuxième mode de largeur (longueur d'essieu de 2,5m). La description de la séquence suivant cette détermination 130 est décrite ci-dessous après la description de la séquence pour le premier mode de largeur.

Si le châssis 2 est dans le premier mode de largeur, l'unité de pilotage 5 détermine 150 si le bras de levage 12 est en position basse et rentrée. Si le bras de levage 12 n'est pas en position basse et rentrée, l'unité de pilotage 5 transmet 160 un signal d'alerte demandant à l'utilisateur de descendre le bras de levage 12 en position basse et rentrée.

Lorsque le bras de levage 12 est en position basse et rentrée, l'unité de pilotage 5 active 190 un mode de vitesse appelé « tortue ». Dans ce mode de vitesse, la vitesse de déplacement du châssis 2 est limitée à une valeur prédéterminée de vitesse inférieure à la vitesse de travail, notamment à la vitesse du mode lièvre.

L'unité de pilotage 5 détermine 200 ensuite si la tourelle 13 est alignée avec l'axe longitudinal de châssis XX' dans une plage angulaire prédéterminée comprise entre -15° et +15° par rapport à l'axe longitudinal de châssis XX'. Si l'orientation de la tourelle 13 n'est pas comprise dans la plage angulaire mentionnée ci-avant, l'unité de pilotage transmet 210 un signal d'alerte à l'utilisateur pour indiquer à l'utilisateur que la tourelle 13 doit être alignée avec le châssis 2.

Lorsque l'orientation de la tourelle 13 est respectée, l'unité de pilotage 5 commande 220 le déblocage de l'oscillation des essieux 8.

L'unité de pilotage 5 détermine 230 ensuite si les roues avant 6 et arrière 7 sont parallèles à l'axe longitudinal de châssis XX' dans une plage angulaire prédéterminée comprise entre -5° et +5° par rapport à l'axe longitudinal de châssis XX'.

Si les roues avant 6 et arrière 7 ne présentent pas une orientation comprise dans la plage angulaire prédéterminée ci-avant, l'unité de pilotage 5 transmet 240 un signal d'alerte pour indiquer à l'utilisateur que les roues doivent être parallèles à l'axe longitudinal de châssis XX'. L'alignement 250 des roues avant 6 et arrière 7 peut être ensuite réalisé par l'utilisateur de manière manuelle ou bien automatiquement.

Lorsque les roues avant 6 et arrière 7 sont alignées avec le châssis 2 dans la plage angulaire prédéterminée, l'unité de pilotage 5 détermine 260 le niveau de luminosité via le capteur de luminosité 22. Si la luminosité est supérieure à un seuil prédéterminé, l'unité de pilotage détermine 270 si les éclairages 23 ont été activés de manière manuelle. Si la luminosité est inférieure à un seuil prédéterminé ou qu'une commande manuelle d'activation a été demandée, l'unité de pilotage 5 active 280 les éclairages 23.

L'unité de pilotage 5 active 290 ensuite de manière automatique les caméras 21 et les radars 20.

L'unité de pilotage 5 détermine 380 si la nacelle 1 est en phase de roulage, i.e. si la nacelle 1 se déplace par rapport au sol. Si la nacelle 1 n'est pas en phase de roulage, l'unité de pilotage transmet 390 un signal d'alerte pour indiquer que la nacelle 1 doit être en phase de roulage pour permettre la rétractation des essieux 8 du châssis 2.

Lorsque la nacelle 1 est en phase de roulage, l'unité de pilotage 5 détermine 400 si le mode crabe est activé. Le mode crabe correspond à une configuration dans laquelle les roues avant 6 et arrière 7 sont parallèles entre elles, avec un angle de braquage non nul par rapport à l'axe longitudinal de châssis XX'. Si le mode crabe est activé, l'unité de pilotage 5 transmet 410 un signal d'alerte pour indiquer que le mode crabe est interdit dans la séquence de rétractation du châssis 2.

Lorsque le mode crabe est désactivé, l'unité de pilotage 5 commande 420 la rétractation des essieux 8 du châssis 2, puis autorise 430 un angle de braquage des roues avant 6 et arrière 7 dans une plage angulaire de 0 à 20° par rapport à l'axe longitudinal de châssis XX'.

L'unité de pilotage 5 détermine 440 ensuite si le châssis 2 est rétracté jusqu'au deuxième mode de largeur (longueur d'essieux de 2,5m). Si les essieux 8 ne sont pas suffisamment rétractés, l'unité de pilotage détermine 450 si une interruption du roulage de la nacelle 1 est intervenue. Si aucune interruption n'est intervenue, la séquence se poursuit par la commande 420 de rétractation du châssis 2. Si une interruption est intervenue, l'unité de pilotage 5 transmet 460 un signal d'alerte pour indiquer que le châssis 2 n'est pas suffisamment rétracté.

Lorsque le châssis 2 est rétracté jusqu'au deuxième mode de largeur, l'unité de pilotage 5 détermine 470 si la séquence de rétractation doit se poursuivre jusqu'au troisième mode de largeur (longueur d'essieux de 2,3m).

Si la séquence de rétractation ne doit pas se poursuivre, l'unité de pilotage 5 active 480 un mode de vitesse appelé « lièvre ». Dans ce mode de vitesse, la vitesse de déplacement du châssis 2 autorisée est supérieure à la valeur prédéterminée de vitesse du mode tortue. L'unité de pilotage 5 autorise 490 une rotation de la tourelle 13 dans une plage angulaire libre par rapport à l'axe longitudinal de châssis XX'. Ensuite, l'unité de pilotage 5 révoque 500 la limitation de l'angle de braquage des roues avant 6 et arrière 7. La séquence de rétractation se termine 660.

A la suite de l'étape de détermination 470, si la séquence de rétraction doit se poursuivre vers le troisième mode de largeur, l'unité de pilotage 5 détermine 510 si la tourelle 13 est brochée ou orientée avec le châssis dans une plage angulaire comprise entre -15° et +15° par rapport à l'axe longitudinal de châssis XX'. Si la tourelle 13 n'est pas brochée et que l'orientation de la tourelle 13 n'est pas comprise dans la plage angulaire ci-dessus, l'unité de pilotage 5 transmet 520 un signal d'alerte pour indiquer que le brochage de la tourelle 13 est requis ou bien que la tourelle 13 doit être alignée avec le châssis 2.

La plage angulaire de la tourelle 13 est limitée entre -15° et +15° lorsque la nacelle passe d'un mode de fonctionnement à un autre mode de fonctionnement. Cette plage angulaire de la tourelle 13 est libre lorsque la nacelle est placée dans un mode de fonctionnement donné.

Lorsque la tourelle 13 est brochée ou alignée avec le châssis 2, l'unité de pilotage détermine 530 si les roues avant 6 et arrière 7 sont parallèles à l'axe longitudinal de châssis XX' dans une plage angulaire prédéterminée comprise entre -5° et +5° par rapport à l'axe longitudinal de châssis XX'.

Si les roues avant 6 et arrière 7 ne présentent pas une orientation comprise dans la plage angulaire prédéterminée ci-avant, l'unité de pilotage 5 transmet 540 un signal d'alerte pour indiquer à l'utilisateur que les roues doivent être parallèles à l'axe longitudinal de châssis XX'. L'alignement 550 des roues avant 6 et arrière 7 peut être ensuite réalisé par l'utilisateur de manière manuelle ou bien automatiquement.

Lorsque les roues avant 6 et arrière 7 sont alignées avec le châssis 2 dans la plage angulaire prédéterminée, l'unité de pilotage 5 détermine 560 si la nacelle 1 est en phase de roulage, i.e. si la nacelle 1 se déplace par rapport au sol. Si la nacelle 1 n'est pas en phase de roulage, l'unité de pilotage transmet 570 un signal d'alerte pour indiquer que la nacelle 1 doit être en phase de roulage pour permettre la rétraction des essieux 8 du châssis 2.

Lorsque la nacelle 1 est en phase de roulage, l'unité de pilotage 5 détermine 580 si le mode crabe est activé. Si le mode crabe est activé, l'unité de pilotage 5 transmet 590 un signal d'alerte pour indiquer que le mode crabe est interdit dans la séquence de rétractation du châssis 2.

Lorsque le mode crabe est désactivé, l'unité de pilotage 5 commande 600 la rétractation des essieux 8 du châssis 2, puis autorise 610 un angle de braquage des roues avant 6 et arrière 7 dans une plage angulaire de 0 à 15° par rapport à l'axe longitudinal de châssis XX'.

L'unité de pilotage 5 détermine 620 ensuite si le châssis 2 est rétracté jusqu'au troisième mode de largeur (longueur d'essieux de 2,3m). Si les essieux 8 ne sont pas suffisamment rétractés, l'unité de pilotage détermine 630 si une interruption du roulage de la nacelle 1 est intervenue. Si aucune interruption n'est intervenue, la séquence se poursuit par la commande 600 de rétractation du châssis 2. Si une interruption est intervenue, l'unité de pilotage 5 transmet 640 un signal d'alerte pour indiquer que le châssis 2 n'est pas suffisamment rétracté.

Lorsque le châssis 2 est rétracté jusqu'au troisième mode de longueur, l'unité de pilotage 5 commande 650 la limitation de l'angle de braquage dans une plage angulaire comprise entre -15° et +15° par rapport à l'axe longitudinal de châssis XX'. La séquence de rétractation est ensuite terminée 660.

A la suite de la détermination 130, l'unité de pilotage 5 transmet 140 un signal d'erreur si le châssis 2 n'est pas dans le deuxième mode de largeur car le châssis 2 ne peut être rétracté davantage. Si le châssis 2 est dans le deuxième mode de largeur, l'unité de pilotage 5 active 170 le mode de vitesse appelé « tortue ».

Lorsque le mode tortue est activé 170, l'unité de pilotage 5 détermine 300 ensuite si les roues avant 6 et arrière 7 sont parallèles à l'axe longitudinal de châssis XX' dans une plage angulaire prédéterminée comprise entre -5° et +5° par rapport à l'axe longitudinal de châssis XX'.

Si les roues avant 6 et arrière 7 ne présentent pas une orientation comprise dans la plage angulaire prédéterminée ci-avant, l'unité de pilotage 5 transmet 310 un signal d'alerte pour indiquer à l'utilisateur que les roues doivent être parallèles à l'axe longitudinal de châssis XX'. L'alignement 320 des roues avant 6 et arrière 7 peut être ensuite réalisé par l'utilisateur de manière manuelle ou bien automatiquement.

Lorsque les roues avant 6 et arrière 7 sont alignées avec le châssis 2 dans la plage angulaire prédéterminée, l'unité de pilotage 5 détermine 330 le niveau de luminosité via le capteur de luminosité 22. Si la luminosité est supérieure à un seuil prédéterminé, l'unité de pilotage détermine 340 si les éclairages 23 ont été activés de manière manuelle. Si la luminosité est inférieure à un seuil prédéterminé ou qu'une commande manuelle d'activation a été demandée, l'unité de pilotage 5 active 350 les éclairages 23.

L'unité de pilotage 5 active 360 ensuite de manière automatique les caméras 21 et active 370 de manière automatique les radars 20. La séquence se poursuit par la détermination 510 déjà mentionnée ci-avant.

### Exemple séquence mode extension

En référence aux figures 7a et 7b, l'unité de pilotage démarre 1000 la séquence d'extension du châssis 2 et détermine 1010 si le mode extension est activé.

Si le mode extension est activé, l'unité de pilotage 5 détermine 1020 si le châssis 2 est dans le troisième mode de largeur (longueur d'essieu de 2,3m). Si le châssis 2 n'est pas dans le troisième mode de largeur, l'unité de pilotage 5 détermine 1030 si le châssis 2 est dans le deuxième mode de largeur (longueur d'essieu de 2,5m). La description de la séquence suivant cette détermination 1030 est décrite ci-dessous après la description de la séquence pour le troisième mode de largeur.

A la suite de la détermination 1020, si le châssis 2 est dans le troisième mode de largeur, l'unité de pilotage 5 détermine 1050 si une extension du châssis 2 au deuxième mode de largeur a été activée. Si une telle activation d'extension au deuxième mode de largeur a été activée, l'unité de pilotage 5 détermine 1060 si la tourelle 13 est brochée ou orientée avec le châssis dans une plage angulaire comprise entre -15° et +15° par rapport à l'axe longitudinal de châssis XX'. Si la tourelle 13 n'est pas brochée et que l'orientation de la tourelle 13 n'est pas comprise dans la plage angulaire ci-dessus, l'unité de pilotage 5 transmet 1070 un signal d'alerte pour indiquer que le brochage de la tourelle 13 est requis ou bien que la tourelle 13 doit être alignée avec le châssis 2.

Lorsque la tourelle 13 est brochée ou alignée avec le châssis 2, l'unité de pilotage 5 active 1080 un mode de vitesse appelé « tortue ». Dans ce mode de vitesse, la vitesse de déplacement du châssis 2 est limitée à une valeur prédéterminée de vitesse inférieure à la vitesse de travail, notamment à la vitesse du mode lièvre.

Lorsque le mode tortue est activé 1080, l'unité de pilotage 5 détermine 1090 ensuite si les roues avant 6 et arrière 7 sont parallèles à l'axe longitudinal de châssis XX' dans une plage angulaire prédéterminée comprise entre -5° et +5° par rapport à l'axe longitudinal de châssis XX'.

Si les roues avant 6 et arrière 7 ne présentent pas une orientation comprise dans la plage angulaire prédéterminée ci-avant, l'unité de pilotage 5 transmet 1100 un signal d'alerte pour indiquer à l'utilisateur que les roues doivent être parallèles à l'axe longitudinal de châssis XX'. L'alignement 1110 des roues avant 6 et arrière 7 peut être ensuite réalisé par l'utilisateur de manière manuelle ou bien automatiquement.

Lorsque les roues avant 6 et arrière 7 sont alignées avec le châssis 2 dans la plage angulaire prédéterminée, l'unité de pilotage 5 commande 1120 la limitation de l'angle de braquage dans une plage angulaire comprise entre -15° et +15° par rapport à l'axe longitudinal de châssis XX'.

L'unité de pilotage 5 détermine 1130 le niveau de luminosité via le capteur de luminosité 22. Si la luminosité est supérieure à un seuil prédéterminé, l'unité de pilotage détermine 1140 si les éclairages 23 ont été activés de manière manuelle. Si la luminosité est inférieure à un seuil prédéterminé ou qu'une commande manuelle d'activation a été demandée, l'unité de pilotage 5 active 1150 les éclairages 23.

L'unité de pilotage 5 active 1160 ensuite de manière automatique les caméras 21 et active 1170 de manière automatique les radars 20.

L'unité de pilotage détermine 1300 la présence d'un obstacle. En présence d'un obstacle, l'unité de pilotage demande 1310 confirmation de l'extension du châssis 2. En l'absence d'obstacle la séquence se poursuit après la demande de confirmation 1310.

Si l'extension du châssis 2 n'est pas confirmée, la séquence d'extension du châssis 2 se termine 1580.

Si l'extension du châssis 2 est confirmée, l'unité de pilotage 5 détermine 1320 si la nacelle 1 est en phase de roulage, i.e. si la nacelle 1 se déplace par rapport au sol. Si la nacelle 1 n'est pas en phase de roulage, l'unité de pilotage 5 transmet 1330 un signal d'alerte pour indiquer que la nacelle 1 doit être en phase de roulage pour permettre l'extension des essieux 8 du châssis 2.

Lorsque la nacelle 1 est en phase de roulage, l'unité de pilotage 5 détermine 1340 si le mode crabe est activé. Si le mode crabe est activé, l'unité de pilotage 5 transmet 1350 un signal d'alerte pour indiquer que le mode crabe est interdit dans la séquence d'extension du châssis 2.

Lorsque le mode crabe est désactivé, l'unité de pilotage 5 commande 1360 l'extension des essieux 8 du châssis 2, puis autorise 1390 un angle de braquage des roues avant 6 et arrière 7 dans une plage angulaire de 0 à 20° par rapport à l'axe longitudinal de châssis XX'.

L'unité de pilotage détermine 1400 ensuite si le châssis 2 est étendu jusqu'au deuxième mode de largeur.

Si les essieux 8 ne sont pas suffisamment étendus, l'unité de pilotage 5 détermine 1370 si une interruption du roulage de la nacelle 1 est intervenue. Si aucune interruption n'est intervenue, la séquence se poursuit par la commande 1360 d'extension du châssis 2. Si une interruption est intervenue, l'unité de pilotage 5 transmet 1380 un signal d'alerte pour indiquer que le châssis 2 n'est pas suffisamment étendu.

Lorsque le châssis 2 est étendu jusqu'au deuxième mode de largeur, l'unité de pilotage 5 détermine 1410 si la séquence d'extension doit se poursuivre jusqu'au premier mode de largeur (longueur d'essieux de 3,8m).

Si la séquence ne doit pas se poursuivre jusqu'au premier mode de largeur, l'unité de pilotage 5 autorise 1420 une rotation de la tourelle 13 autour de l'axe vertical de tourelle AA'. L'unité de pilotage 5 révoque 1430 ensuite la limitation de l'angle de braquage des roues avant 6 et arrière 7 et active 1440 le mode de vitesse appelé « lièvre ». Dans ce mode de vitesse, la vitesse de déplacement du châssis 2 autorisée est supérieure à la valeur prédéterminée de vitesse du mode tortue.

A l'issue de la détermination 1410, si la séquence doit se poursuivre jusqu'au premier mode de largeur, la séquence se poursuit entre les étapes 1290 et 1450 du logigramme décrites ci-après.

A la suite de la détermination 1030 du mode de largeur du châssis 2, l'unité de pilotage 5 transmet 1040 un signal d'erreur si le châssis 2 n'est pas dans le deuxième mode de largeur car le châssis 2 ne peut être étendu davantage.

Si le châssis 2 est dans le deuxième mode de largeur à la suite de la détermination 1030 du mode de largeur, l'unité de pilotage 5 détermine 1180 si une extension du châssis 2 au troisième mode de largeur a été activée. Si une telle activation d'extension au troisième mode de largeur a été activée, l'unité de pilotage 5 détermine 1190 si la tourelle 13 est orientée avec le châssis 2 dans une plage angulaire comprise entre -15° et +15° par rapport à l'axe longitudinal de châssis XX'. Si l'orientation de la tourelle 13 n'est pas comprise dans la plage angulaire ci-dessus, l'unité de pilotage 5 transmet 1200 un signal d'alerte pour indiquer que la tourelle 13 doit être alignée avec le châssis 2.

Lorsque la tourelle 13 est alignée avec le châssis 2, l'unité de pilotage 5 active 1210 la mode de vitesse appelé « tortue ».

Lorsque le mode tortue est activé 1210, l'unité de pilotage 5 détermine 1220 ensuite si les roues avant 6 et arrière 7 sont parallèles à l'axe longitudinal de châssis XX' dans une plage angulaire prédéterminée comprise entre -5° et +5° par rapport à l'axe longitudinal de châssis XX'.

Si les roues avant 6 et arrière 7 ne présentent pas une orientation comprise dans la plage angulaire prédéterminée ci-avant, l'unité de pilotage 5 transmet 1230 un signal d'alerte pour indiquer à l'utilisateur que les roues doivent être parallèles à l'axe longitudinal de châssis XX'. L'alignement 1240 des roues avant 6 et arrière 7 peut être ensuite réalisé par l'utilisateur de manière manuelle ou bien automatiquement.

Lorsque les roues avant 6 et arrière 7 sont alignées avec le châssis 2 dans la plage angulaire prédéterminée, l'unité de pilotage 5 détermine 1250 le niveau de luminosité via le capteur de luminosité 22. Si la luminosité est supérieure à un seuil prédéterminé, l'unité de pilotage détermine 1260 si les éclairages 23 ont été activés de manière manuelle. Si la luminosité est inférieure à un seuil prédéterminé ou qu'une commande manuelle d'activation a été demandée, l'unité de pilotage 5 active 1270 les éclairages 23.

L'unité de pilotage 5 active 1280 ensuite de manière automatique les caméras 21 et active 1290 de manière automatique les radars 20.

L'unité de pilotage 5 détermine 1450 si la nacelle 1 est en phase de roulage, i.e. si la nacelle 1 se déplace par rapport au sol. Si la nacelle 1 n'est pas en phase de roulage, l'unité de pilotage 5 transmet 1460 un signal d'alerte pour indiquer que la nacelle 1 doit être en phase de roulage pour permettre l'extension des essieux 8 du châssis 2.

Lorsque la nacelle 1 est en phase de roulage, l'unité de pilotage 5 détermine 1470 si le mode crabe est activé. Si le mode crabe est activé, l'unité de pilotage 5 transmet 1480 un signal d'alerte pour indiquer que le mode crabe est interdit dans la séquence d'extension du châssis 2.

Lorsque le mode crabe est désactivé, l'unité de pilotage 5 commande 1490 l'extension des essieux 8 du châssis 2, puis autorise 1500 un angle de braquage des roues avant 6 et arrière 7 dans une plage angulaire de 0 à 20° par rapport à l'axe longitudinal de châssis XX'.

L'unité de pilotage détermine 1510 ensuite si le châssis 2 est étendu jusqu'au premier mode de largeur.

Si les essieux 8 ne sont pas suffisamment étendus, l'unité de pilotage 5 détermine 1520 si une interruption du roulage de la nacelle 1 est intervenue. Si aucune interruption n'est intervenue, la séquence se poursuit par la commande 1490 d'extension du châssis 2. Si une interruption est intervenue, l'unité de pilotage 5 transmet 1530 un signal d'alerte pour indiquer que le châssis 2 n'est pas suffisamment étendu.

L'unité de pilotage 5 autorise 1540 ensuite une rotation de la tourelle 13 autour de l'axe vertical de tourelle AA' et révoque 1550 ensuite la limitation de l'angle de braquage des roues avant 6 et arrière 7.

L'unité de pilotage détermine 1560 ensuite si le bras de levage 12 est en position haute et/ou en position sortie. Si le bras de levage 12 n'est pas rentré et en position basse, l'unité de pilotage 5 verrouille 1570 la possibilité d'oscillation des essieux 8. Si le bras de levage 12 est rentré et en position basse, la séquence d'extension se termine 1580.

## Revendications

1. Nacelle (1) comprenant un châssis (2) d'axe longitudinal (XX') suivant la direction avant/arrière, une plateforme (3) présentant une zone de réception d'un opérateur, un dispositif d'entrainement (4) en déplacement de la plateforme par rapport au châssis, et une unité de pilotage (5), le châssis (2) étant équipé de roues avant (6) et de roues arrières (7) respectivement reliées au châssis (2) par un essieu (8) de longueur ajustable, chaque essieu (8) avant ou arrière étant associé à un mécanisme de réglage en longueur (9) d'essieu, les roues avant (6) et/ou arrière (7) étant des roues directrices pouvant être braquées à droite ou à gauche, le châssis (2) étant équipé d'un système moteur d'entrainement (11) en rotation d'au moins une partie des roues dites motrices de la nacelle (1), le dispositif d'entrainement (4) en déplacement de la plateforme comprenant un bras de levage (12) porté par une tourelle (13) pour un montage du bras de levage (12) en rotation autour d'un axe (AA') dit vertical à l'état positionné de la nacelle (1) sur une surface plane horizontale, ce bras de levage (12) monté mobile entre une position basse et une position haute étant un bras télescopique de longueur ajustable entre une position sortie de grande longueur et une position rentrée et la nacelle comprenant un capteur de détermination de la position angulaire du bras entre ses positions haute et basse (14), un capteur de détermination de la position angulaire du bras autour de l'axe vertical (15), un capteur de détermination d'un paramètre représentatif de la longueur du bras (16), un capteur de détermination de l'angle de braquage des roues (17) et un capteur de la vitesse de déplacement de la nacelle (18), **caractérisée en ce que** la nacelle (1) comprend un mode de commande de réduction en longueur des essieux appelé mode rétractation et un sélecteur dudit mode de commande et **en ce que**, à l'état sélectionné dudit mode de commande, l'unité de pilotage (5) est configurée pour commander chaque mécanisme de réglage en longueur (9) d'essieu (8) dans le sens d'une réduction de la longueur desdits essieux (8) en fonction d'au moins 5 conditions cumulatives, la première condition étant liée à la vitesse de déplacement de la nacelle (1), la deuxième condition étant liée à l'angle de braquage des roues (6,7), la troisième condition étant liée à la position angulaire du bras de levage entre ses positions haute et basse, la quatrième condition étant liée à la longueur du bras de levage, la cinquième condition étant liée à la position angulaire du bras de levage autour de son axe vertical (AA').

2. Nacelle (1) selon la revendication 1, **caractérisée en ce que**, à l'état sélectionné du mode rétractation, l'unité de pilotage (5) est configurée pour commander le mécanisme de réglage en longueur (9) d'essieu (8) dans le sens d'une réduction de la longueur desdits essieux lorsque :
- la vitesse de la nacelle est à l'intérieur d'une plage de vitesses non nulle prédéterminée,
- l'angle de braquage des roues est compris à l'intérieur d'une plage prédéterminée,
- le bras de levage est en position abaissée et rentrée et le bras forme en projection verticale avec la projection verticale de l'axe longitudinal (XX') du châssis à un angle prédéterminé.

3. Nacelle (1) selon la revendication 2, **caractérisée en ce que** l'angle prédéterminé formé par le bras de levage en position abaissée et rentrée est au plus égal à 15°.

4. Nacelle (1) selon la revendication 2 ou 3, **caractérisée en ce qu'**elle comprend dans le mode rétractation au moins deux longueurs réduites des essieux sélectionnables et **en ce que** la plage prédéterminée d'angle de braquage des roues et correspondant à la deuxième condition est fonction de la longueur réduite des essieux sélectionnée.

5. Nacelle (1) selon la revendication 4, **caractérisée en ce que** la plage prédéterminée d'angle de braquage des roues est la plus réduite à l'état sélectionné de la longueur la plus réduite des essieux (8).

6. Nacelle (1) selon l'une des revendications 1 à 5, **caractérisée en ce que** chaque roue (6,7) directrice qui est une roue orientable autour d'un axe dit vertical orthogonal à l'axe longitudinal du châssis est une roue orientable de manière indépendante des autres roues.

7. Nacelle (1) selon l'une des revendications 1 à 6, **caractérisée en ce que** chaque essieu (8) se présente sous forme d'un seul arbre de longueur ajustable ou de segments d'arbre parallèles, chaque segment d'arbre étant de longueur ajustable.

8. Nacelle (1) selon l'une des revendications 1 à 7, **caractérisée en ce que** l'essieu arrière est un essieu oscillant.

9. Nacelle (1) selon l'une des revendications 1 à 8, **caractérisée en ce qu'**elle comprend au moins deux radars (20) disposés l'un, à l'avant, l'autre, à l'arrière du châssis (2) et **en ce que**, à l'état sélectionné dudit mode rétractation, l'unité de pilotage (5) est configurée pour commander l'activation automatique des radars (20).

10. Nacelle (1) selon l'une des revendications 1 à 9, **caractérisée en ce qu'**elle comprend au moins deux caméras (21) disposées l'une, à l'avant, l'autre, à l'arrière du châssis (2), et **en ce que** à l'état sélectionné dudit mode rétractation, l'unité de pilotage (5) est configurée pour commander l'activation automatique des caméras (21).

11. Nacelle (1) selon l'une des revendications 1 à 10, **caractérisée en ce qu'**elle comprend au moins un capteur de luminosité (22) et quatre éclairages (23) disposés l'un à l'arrière du châssis (2), les autres sur la tourelle (13) et **en ce que** à l'état sélectionné dudit mode rétractation, l'unité de pilotage (5) est configurée pour commander l'activation automatique des éclairages (23) en fonction du niveau de luminosité (22).

12. Nacelle (1) selon l'une des revendications 1 à 11, **caractérisée en ce que** ledit châssis (2) présente un mode crabe, c'est-à-dire un mode dans lequel les roues avant (6) et arrière (7) sont parallèles entre elles et non parallèles à l'axe longitudinal (XX'), l'unité de pilotage (5) étant configurée pour commander chaque mécanisme de réglage en longueur (9) d'essieu (8) dans le sens d'une réduction de la longueur desdits essieux (8) à l'état désactivé du mode crabe.

13. Procédé de commande d'une nacelle (1), **caractérisé en ce que** la nacelle (1) étant conforme à l'une des revendications 1 à 12, à l'état sélectionné du mode rétractation, le procédé comprend, pour commander chaque mécanisme de réglage en longueur (9) d' essieu (8) dans le sens d'une réduction de la longueur desdits essieux au moins une étape de détermination de la vitesse de déplacement au sol de la nacelle, une étape de détermination de l'angle de braquage des roues, une étape de détermination de la position du bras entre les positions haute et basse, une étape de détermination de l'état rentré ou sorti du bras et une étape de détermination de l'angle que le bras, qui est en position abaissée et rentrée, forme en projection verticale avec la projection verticale de l'axe longitudinal du châssis (2).
